Europäisches Patentamt

European Patent Office

Office européen des brevets

(11) Publication number: **0 209 932**
**A1**

# EUROPEAN PATENT APPLICATION

(21) Application number: 86201106.1

(22) Date of filing: 24.06.86

(51) Int. Cl.4: **A01K 61/00** , A01G 7/00 ,
A01G 9/14

(30) Priority: 24.06.85 DK 2834/85

(43) Date of publication of application:
28.01.87 Bulletin 87/05

(84) Designated Contracting States:
AT BE CH DE FR GB IT LI LU NL SE

(71) Applicant: **Nielsen, Jörgen Rask**
**Ansgarvej 8**
**DK-5800 Nyborg(DK)**

(72) Inventor: **Nielsen, Jörgen Rask**
**Ansgarvej 8**
**DK-5800 Nyborg(DK)**

(74) Representative: **Smulders, Theodorus A.H.J.**
**et al**
**Vereenigde Octrooibureaux Nieuwe Parklaan**
**107**
**NL-2587 BP 's-Gravenhage(NL)**

(54) A greenhouse for intensive utilization.

(57) In an entirely closed and well heat insulated greenhouse (2) the major part of the floor is laid out as one or more water ponds (6), which are in heat exchange connection with the air of the house through a heat pump system, whereby day/night fluctuations of the air temperature are minimized. An active heating or cooling is effected according to the requirements,. and the air is demoistured and cleaned as required. The water ponds (6), which are hereby kept warm all the year, are utilized as or in a fish fry farming system, and the plants are arranged in two layers (10,12). The fish ooze is usable as a fertilizer ingredient for the plants, while for the watering of the plants use is made of cleaned water from an internal cleaning system or from an air dehumidifying system.

EP 0 209 932 A1

Fig. 4.

# A greenhouse system for intensive utilization.

The present invention relates to a greenhouse, in which plants are grown closely juxtaposed on carrier means in a level above the floor area of a growing room, and which comprises a plant watering system and an air heating system. The carrier means are normally constituted by plant tables supporting the plants at a convenient working height.

Greenhouses of this type established for intensive running should be laid out such that the area is utilized as effectively as possible, not only for effective use of the available square meters, but also to a high degree for an effective use of the heat energy as supplied during cold periods. Thus, it is well known that the said plant tables may be displaceably arranged such that they are generally closely juxtaposed, yet groupwise displaceable, whereby the required working space may be provided along each of the tables or between the tables of every pair of normally closely juxtaposed tables, such that the total free working space may be reduced considerably or in other words the effective plant growing area may be correspondingly increased.

As mentioned below even such greenhouse installations have been suggested, by which the growing area may be utilized to more than 100%, viz. with the use of plant carrier means in levels one above the other.

For the economy of the greenhouse the degree of utilization of the available area and room space is of course of utmost importance, and it is the purpose of the invention to provide a greenhouse which may be run highly intensively and moreover may operate in environmental insulation from the surroundings with associated special advantages.

The greenhouse according to the invention is characterized by the combination of features recited in the characterizing clause of claim 1. A starting feature is that the growing room is confined by heat insulating walls, this for obvious reasons being essential for a good heating economy during the periods in which the growing room should be artificially heated. An associated problem will be that during warm periods and even during such daytime periods, in which the sun shows a high heating effect, the temperature in the growing room may rise well beyond an optimal valve. Conventionally such an overheating is counteracted by a suitable ventilation of the growing room, normally by the opening of a row of exhaust valve segments at the top of the growing room, but according to the invention such an opening of the room towards the surroundings should be kept very limited or better entirely avoided, and the water in the floor pond as specified in claim 1 will serve as a heat accumulator, which is operable to exchange heat with the air of the room, directly or indirectly. Hereby the water may absorb heat developed during the daytime and redeliver the heat overnight so as to smoothen out the daily temperature fluctuations of the air of the growing room. When necessary an additional artificial heating or cooling may be effected, and an important result is that the growing room should not, at least generally, be ventilated towards the surrounding atmosphere, whereby both incoming and outgoing pollution is counteracted.

For the invention it is essential that the floor pond is utilized even for a productive purpose, and it is here a basic consideration that the water, all the year round, will be kept more or less heated, primarily of course during the summer time, but even during the winter time, where the air is heated anyway. When the pond is reasonably heat insulated the water may be kept heated to the air temperature all through the winter time without much extra heating energy being spent. The water thus being generally constantly warm it will be particularly well suited as a medium for the breeding of fish fry, whereby the water in the floor pond may constitute an extra, productive layer in the greenhouse to thereby improve the economy thereof considerably.

It is already known that fish fry may be advantageously breeded in ponds which are kept heated during the winter time, and it will be appreciated that in connection with the invention this required heating, which is a major cost factor, will be achieved practically free of costs, inasfar as the heat should be supplied to the growing room anyway. For the integration of the plant growing and the fish fry breeding it is a lucky coincidence that the fish breeding should preferably take place in shadowed waters, whereby the plants may still be closely juxtaposed in a light receiving and thus shadowing layer.

According to WO 83/03333 an integration of plant growing and animal breeding has already been proposed, but only for hydrophytes, which are sprinkled by the water in which the animals live. Such a system is absolutely undesired in the present connection, because terrestrial plants and fish fry should not be provided with the same nutrients, and for the desired very effective production it is thus even a condition that the watering system of the plants be supplied from a water source which is different from the water in the pond. It is not even desirable that exess water from the plants drip into the water in the pond.

Thus, for the invention it is in no way of any primary significance whether some sort of symbiosis exists between the plants and the fishes. On the other hand, in a closed system the fishes may utilize, via the water, the oxygen as produced by the plants, and the excrement ooze of the fishes will be usable as a nutrient component for the plants. The ooze, therefore, need not be removed from the greenhouse to some other place, and in a further developed embodiment of the invention it is desired to provide for an environmentally totally insulated greenhouse installation of an absolutely clean internal environment, from which only the produced products, plants and fishes, are delivered, and to which only the basic starting products, seeds or small plants and eggs or fish fry, are supplied, along with the required nutrients.

It is well known that an optimal temperature for plant growing is about 22°C and that the relative humidity should be substantially below 100%, as the growth stops in moisture saturated air. The said temperature is also very advantageous as far as the fish fry breeding is concerned. For counteracting a moisture staturation of the air the installation should comprise demoisturing means, preferably a refrigerated condensation device, whereby the associated refrigeration system will also be usable for generally cooling the air during warm periods, in which the pond water is unable to cause a temperature equalization near the desired optimal growing temperature.

Invertedly the growing room, irrespective of the high heat insulation thereof, should be artificially heated during cold periods for maintaining the air temperature close to the said optimal temperature, i.e. a more or less conventional heating system should be provided. It is possible hereby to make use of a cheap gas burner system, inasfar as the already existing demoisturing means will be operable to remove the exess humidity as produced by a direct gas burning inside the growing room.

The additional use of a demoisturing and cooling system, of course, will involve extra installation and operation costs, and for this reason it is necessary or desirable to arrange for the greenhouse to operated extra intensively, this being achieved already by the utilization of the pond water for fish fry breeding purposes without this utilization requiring any significant extra supply of heat energy. It is here of special importance that the growing room may well -in an already known manner -be adapted so as to house and support the plants in two or even more horizontal layers, as each additional layer will enjoy the same adjustment of the temperature and humidity as effected already for the first layer of plants. No considerable extra heat or cold should be supplied. It is important, of course, that the plants of the single layers may receive the required light energy, but this is achievable either by artificial light or -preferably -by arranging for a successive change of the plants between the different layers such that all the plants are brought to pass through an upper zone, in which they will receive the natural sunlight. It is less important that during their passage of one or more underlying layers they will pass through shadowy zones, inasfar as for an optimal or a good growth they should not be exposed to constant light anyhow.

With the use of a suitable conveyor system for the successive change of the plants between the different layers it is achievable that even in an extensive growing room only a very small floor area will be required for the attending of the plants or for the plantation and harvesting thereof, as the plants or plant carriers may be moved past a single handling station, e.g. at one side or end of the growing room. Particularly with the use of such a conveyor system the general laying out of the floor area as an open pond, will not cause any plant handling problems, but if desired the pond may well be covered by a rigid floor.

In the following the invention is described in more detail with reference to the drawing, in which:-

Fig. 1 is a schematic perspective view of a greenhouse according to the invention,

Fig. 2 is a sectional view of such a greenhouse,

Fig. 3 is a perspective view of a preferred plant conveyor system, and

Fig. 4 is a schematic perspective view of a greenhouse in a preferred lay-out.

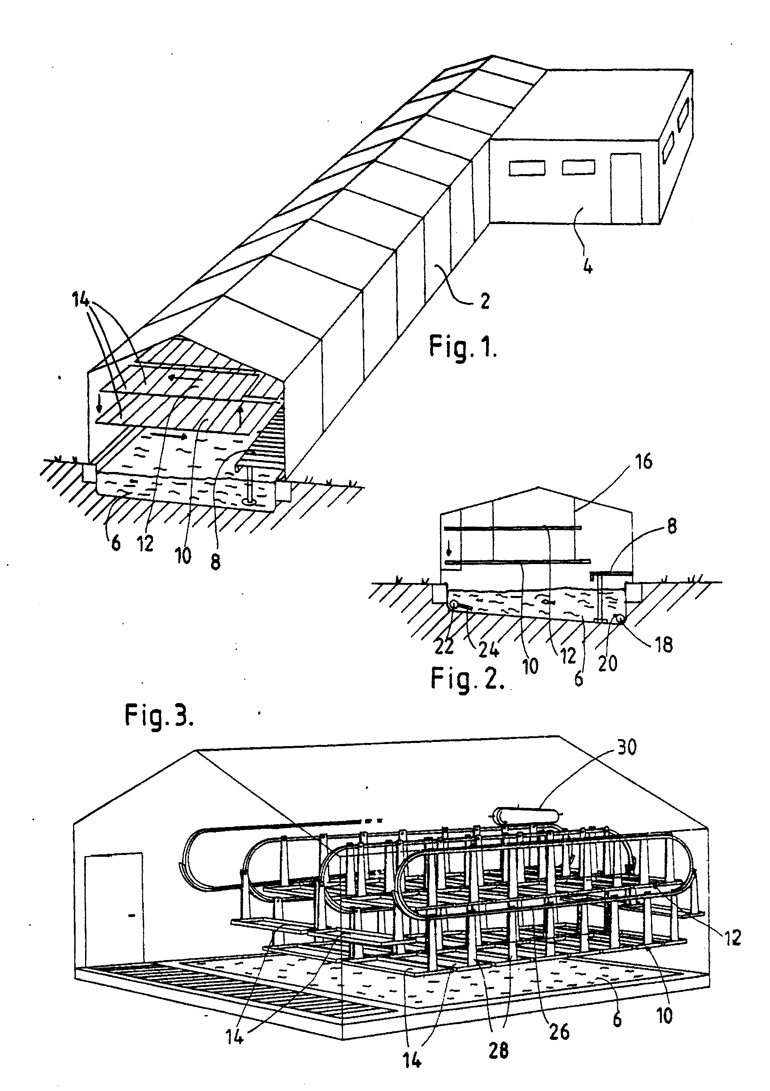

In Fig. 1 is shown a greenhouse 2 having a side building. The greenhouse is built with a transparent three-or four-layer sheet so as to be highly heat insulated, and moreover the house is completely tight, i.e. without conventional ventilation openings. The bottom of the house is made as a water pond 6 formed by a strong plastic sheet lining against a suitable insulation layer, and a gangway or working bridge stretches along one long side of the house.

Inside the house is provided a carrier structure for two plant platforms 10 and 12 supporting a plurality of plant trays 14, which, by non-illustrated actuator means, are movable in the directions of the arrows shown, means for raising and lowering the trays being arranged adjacent the respective front ends and rear ends of the platforms. The front end of the lower platform 10 is located in a suitable working position relative the working bridge 8, such that the plants on the trays 14 can be attended to from this bridge during successive rearrangement of the trays. In Fig. 2 it is indicated that the platforms 10,12 may be suspended in carrier members 16, but the carrier system could of course be supported on the bottom of the pond 6 or on partition walls between different pond sections.

As shown in Fig. 2 the bottom of the pond 6 may be inclined downwardly towards a lowermost area, in which means are provided for lengthwise conveying of collected ooze from the fishes in the pond. Such means may comprise a pressure water pipe 18 having exterior axially directed spray nozzles 20, and at the higher side of the bottom may be arranged another pressure water pipe 22 having radial spray nozzles 24 for crosswise washing the bottom ooze towards the deeper side of the pond, from one end of which the ooze may then be collected. In the side building 4 the collected ooze may be processed for the production of a suitable plant nutrient or fertilizer by mixing it with other relevant substances, whereafter the fertilizer is supplied to the plants.

The greenhouse is equipped with all relevant installations for heating and cooling of the air and/or the water, though such installations are not illustrated. Preferably a heat pump system with associated heat exchangers is used for the desired heat exchange between the water and the air, i.e. it will not be a requirement that the water in the pond is in open surface contact with the air. Besides, such a contact alone would hardly be sufficient for the required heat exchange.

The water may absorb quite considerable amounts of heat/cold without the associated temperature fluctuations being large enough to endanger the fishes, and during long time periods of the year the water may thus be utilized for a smoothening out of the day/night temperature of the air, just as the water during other periods may be utilized for the reduction of an otherwise existing energy demand for a required general heating or cooling of the air. The water may act as an effective collector of sun heat during the cold periods and night coolness during the warm periods.

The heating system may be constituted by a simple gas burner system or a gas fired furnace.

The greenhouse should also be provided with means for circulating and cleaning both the air and the water as well as with a system for drying the air, preferably by condensation cooling. It will be appreciated that an installed refrigeration system may be utilized both for cooling and condensation drying of the air and for heat pumping between the air and the water.

In the preferred greenhouse arrangement according to the invention it is endavoured to provide for a system, which is environmentally totally separated from the surroundings, and which is operable with a completely clean and totally controlled internal environment, such that the system is usable for the growth of medical plants and for the breeding of disease-free fishes.

Of course the required installations for supplying fish fodder to the pond or ponds as well as for supplying watering water to the plants on the trays 14 should be provided, but such special installations will not be described in more detail, as they are already known in the art. It should be emphasized, however, that the plant watering water should be supplied from an internal water cleaning station and thus not directly from the pond water. The water should be delivered to the plant watering system in a suitably enriched state, and if dripping occurs from the plant trays it should be ensured that such dripping water is collected without being fed to the pond water. The watering water will evaporate from the plants and will thus in a cleaned condition be returned to the liquid phase either by assimilation in the pond water or by delivery from the said condensation drying unit.

A preferred and principally known carrier system for the plants is shown in Fig. 3. There is used a system of carrier rails 26, which extend along an upper and a lower horizontal run with associated curved end connections between these runs, and which carries a continuous row of plant trays 14 suspended in brackets 28, which are provided with upper carrier rollers for movement along the rails 26. The upper ends of the brackets 28 are interconnected through a non-illustrated chain extending along the respective rails 26 and driven by a traction station 30 such that the tray units 14,28 are circulated along the rails in a paternoster-like manner, whereby the trays 14 will form an upper and a lower platform of closely juxtaposed trays, while at the opposed ends of the rails 26 the trays will be successively moved up-and downwardly, respectively, through an outwardly curved path. The trays as hereby passing the gangway 8 upwardly or downwardly will be accessible for working during a temporary stop of the chain conveyor with the trays located in a convenient working position in a level between the two tray layers or platforms 10 and 12, and it will be appreciated that all the trays will successively be shifted between the two tray layers through the working position, in which the trays and plants may be attended to for planting, maintenance and harvesting.

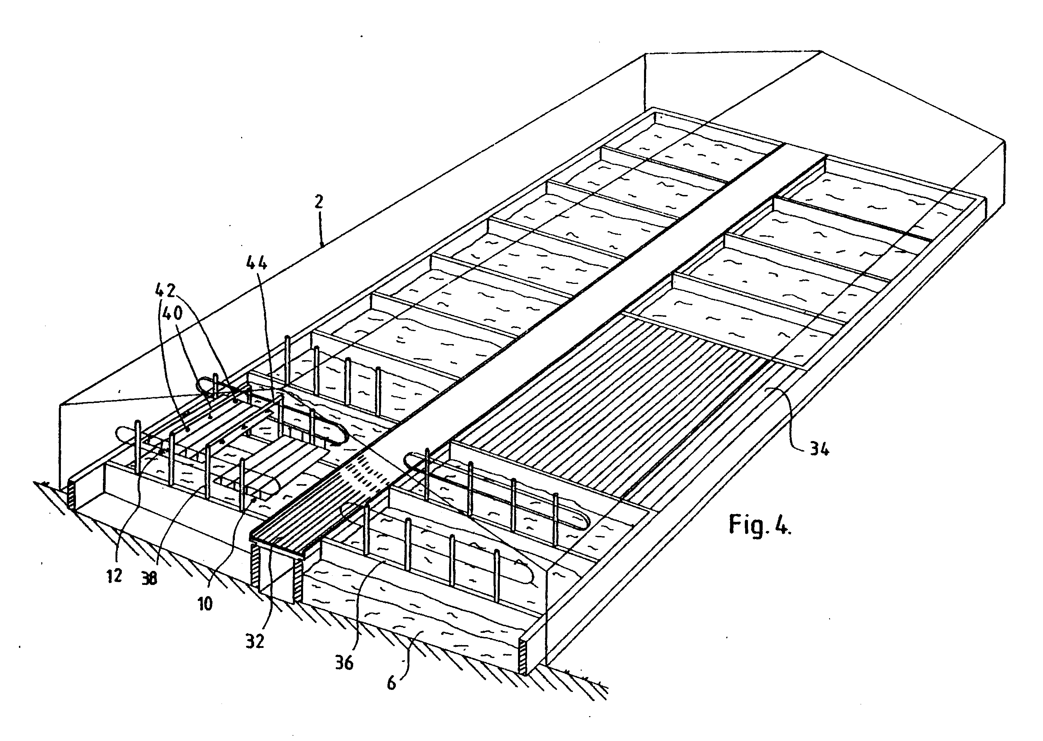

Fig. 4 shows a preferred embodiment of a greenhouse according to the invention. The house has a lengthwise extending, central working bridge 32, from which the said carrier rail systems 26 project to both sides except in a platform areaa 34, on which the work with the inlet and outlet products of the house may be carried out, and on which the required machinery for the air condition etc. is mounted. The fish fry ponds are divided in sections by transverse partitions 36, which are provided with posts 38 carrying the rail systems 26.

Between the upper ends of respective pairs of the posts 38 are arranged lengthwise extending carrier booms 40 for carrying artificial lights 42 and watering sprinkler pipes 44.

Underneath the working bridge 32 there is sufficient space for the required pipe connections between the respective pond sections and the working area 34. Air channels, not shown, are provided preferably along the side walls of the house.

The invention also comprises the described method of operating the greenhouse.

## Claims

1. A greenhouse system, in which plants are carried closely juxtaposed in a level above the floor of the house, and having a watering system for the plants and a heating system for the air in the house,

characterized by the combination of

a) the greenhouse (2) being provided with walls of good heat insulation capacity, i.e. comprising at least two layers of glass or transparent sheet material,

b) the floor of the greenhouse or at least a substantial area portion thereof being laid out as a water pond (6), which is in operative heat exchange connection with the air in the greenhouse so as to constitute a heat or cold accumulator,

c) said water pond constituting or forming part of a fish or fish fry farming system, and

d) said plant watering system (44) being connected with a water source different from the water of the pond.

2. A greenhouse system according to claim 1, characterized in that the water pond (6) is in heat exchange connection with the air through a heat pump system with associated heat exchangers in the water and the air, respectively, preferably located in circulation channels for these media.

3. A greenhouse system according to claim 1, characterized in that it is equipped with that type of plant carrier means (14) which are movable through two or more levels (10,12) above each other and hereby successively movable past a fixed working area (8,32), which is preferably located along an edge portion of the pond or pond sections.

4. A greenhouse system according to claim 1, characterized in that the house is built in a sealed manner for total separation between the inner and the outer environments and that the system comprises equipment for cleaning of water and air, as well as for demoisturing of the air and for active, selective heating or cooling of the air and/or the water.

5. A greenhouse according to claim 4, characterized in that the water source for the plant watering system (44) is constituted by the outlet of a cleaning system for water from the pond and/or the outlet of an air demoisturing system.

Fig. 1.

Fig. 2.

Fig. 3.

Fig. 4.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-4 077 158  (ENGLAND) <br> * Column 4, line 65 - column 12, line 33; figures 1-5; claims 1,4-7 * | 1,4,5 | A 01 K  61/00 <br> A 01 G  7/00 <br> A 01 G  9/14 |
| Y | | 2 | |
| Y | | 3 | |
| Y | LANDTECHNIK, vol. 33, no. 1, January 1978, pages 22-24, Dortmund, DE; C. VON ZABELTITZ: "Möglichkeiten des Einsatzes von Solarenergie zur Gewächshausheizung" <br> * Page 22, column 3, lines 3-47; page 23, column 2, line 1 - page 24, column 3, line 28; figures 1-5 * | 2 | |
| A | IDEM | 1,4,5 | TECHNICAL FIELDS SEARCHED (Int. Cl.4) <br><br> A 01 G <br> A 01 K |
| Y | US-A-4 068 405  (CAMPBELL et al.) <br> * Figures 1,2; column 2, lines 14-37 * | 3 | |
| X,P | EP-A-0 158 160  (BORN) <br> * Page 5, line 20 - page 7, line 4; claims 1,14-16 * | 1 | |

-/-

The present search report has been drawn up for all claims

| Place of search | Date of completion of the search | Examiner |
|---|---|---|
| THE HAGUE | 06-10-1986 | MEINDERS H. |

| | DOCUMENTS CONSIDERED TO BE RELEVANT | | Page  2 |
|---|---|---|---|

| Category | Citation of document with indication, where appropriate, of relevant passages | Relevant to claim | CLASSIFICATION OF THE APPLICATION (Int. Cl.4) |
|---|---|---|---|
| A | --- | 3,4 | |
| Y,D | WO-A-8 303 333  (PEDERSEN et al.)<br>* Page 4, line 12 - page 5, line 3; figures 1,2; claims 1-5,8 *<br>--- | 1,4,5 | |
| Y | GB-A-1 533 848  (BUSH et al.)<br>* Page 1, lines 51-79; claims 1,5; figure 1 *<br>--- | 1,4,5 | |
| A | DE-A-2 924 653  (LAMM)<br>* Claim 1; page 5, line 9 - page 6, line 28 *<br>---<br><br>----- | 1,2,4 | |
| | | | **TECHNICAL FIELDS SEARCHED (Int. Cl.4)** |

The present search report has been drawn up for all claims

| Place of search | Date of completion of the search | Examiner |
|---|---|---|
| THE HAGUE | 06-10-1986 | MEINDERS H. |